# EUROPEAN PATENT APPLICATION

(11) **EP 3 009 263 A1**
(43) Date of publication of application: **20.04.2016**
(21) Application number: 14189062.4
(22) Date of filing: 15.10.2014
(51) Int. Cl.: B32B 27/30, B32B 27/32, B32B 27/34

(54) **Barrier film**

(71) Applicant: Trioplast AB, 333 00 Smålandsstenar (SE)
(72) Inventor: Eliasson, Mette, 504 30 Borås (SE); Runesson, Torbjörn, 333 33 Smålandsstenar (SE); Roos, Kennert, 330 26 Burseryd (SE); Mattsson, Robert, 471 95 Skärhamn (SE)
(74) Representative: Awapatent AB

(57) **Abstract**

The invention relates to a stretchable multi-layer barrier film, in particular a stretch film for wrapping bulk products, comprising at least one barrier layer arranged between two polyolefin layers, and to use of the film as an agricultural film such as a silage film, a pallet wrapping film, or a waste wrap film. Advantageously, the multi-layer barrier film may have a low transmission of oxygen and water vapor, and a mechanical performance comparable for example with a conventional silage film. The film is adapted to retain its qualities upon further stretching.

## Description

### Field of the invention

The present invention relates to polyolefin-based protective films used in industry or agriculture.

### Background

Plastic film, in particular stretch film, is frequently used for wrapping various products, for example wrapping palletized goods for shipping or storing, or for baling bulk products, in particular agricultural products such as grass, various crops, etc. "Stretch film" refers to film which is adapted to be stretched during the wrapping procedure.

Conventionally, stretch films are made of one or more polymers, in particular polyolefins e.g. polyethylene. The polyolefin is extruded and blown to form a tubular film, which can optionally be stretched between two pairs of rollers during manufacture so that the film length increases by 50-400 %. This is referred to as a pre-stretched stretch film. The optionally pre-stretched film is then (further) stretched when used for wrapping. Usually various additives such as pigments, tackifiers, UV stabilizers, etc, are added to the film composition in order to meet the requirements of the intended use.

In agricultural applications, stretch film may for instance be used as fodder protection. For the production of silage, anaerobic conditions are desirable, and so the wrapping film should provide a barrier against moisture and oxygen. Silage film is also referred to as balewrap. Stretch film for silage production requires e.g. a good UV stabilization of the film material, high cling, and high mechanical performance in terms of good resistance to puncturing and tearing. Conventionally, silage films have consisted of a single layer, although in recent years multilayer films for silage applications have emerged. Now, usually a silage film is formed of more than one layer (multi-layer film), for example two layers (one barrier layer and one cling layer), or 1-3 core layers (barrier layers) sandwiched by two exterior layers (cling layers). Nevertheless, current silage films allow leakage of oxygen into the bale which results in undesirable aerobic decomposition of the crop. Even under good conditions, up to 5 % of the nutritional value of the silage may be lost due to such oxygen leakage. This also means a considerable economic loss for the farmer.

In order to improve protection of the bale and reduce oxygen leakage, one or more extra rounds of wrapping film may be applied around a bale. However, using more film increases the materials cost, and a more time-consuming wrapping procedure also means an economic loss.

Hence, there is a demand for stretch films with improved barrier properties.

### Summary of the invention

An object of the present invention is to at least partly overcome the problems in the prior art, and to provide a barrier film with properties desirable for use in agriculture and/or industry, in particular as a stretch wrap film.

According to a first aspect of the invention, this and other objects are achieved by a stretchable multi-layer barrier film, in particular a stretch film for wrapping bulk products, the film comprising at least one barrier layer arranged between two polyolefin layers. Typically at least one tie layer is provided between the barrier layer and one of the polyolefin layers.

Throughout this specification "stretchable film" is used interchangeably with "stretch film", and refers to a film which is capable of, and adapted for, being stretched during use, i.e. a wrapping process.

It is noted that a thin stretch film may pose different requirements on the film materials compared to a film that is not intended to be stretched. As described below, the present multi-layer barrier film, and in particular the barrier layer, may be made quite thin and yet have desirable qualities also when stretched.

As used herein, "multi-layer film" refers to a film having at least two layers joined to one another. For example, the multi-layer barrier film according to embodiments of the invention may comprise 3 layers, 4 layers, 5 layers, 6 layers or 7 layer, or even more than 7 layers, for example 9 layers.

In one embodiment, the film comprises a five-layer structure comprising, in this order,
i) an exterior polyolefin layer,
ii) a tie layer,
iii) a barrier layer,
iv) a tie layer, and
v) an exterior polyolefin layer.

In other embodiments the film comprises a 7-layer structure comprising, in this order,
i) an exterior polyolefin layer,
ii) a polyolefin support layer,
iii) a tie layer,
iv) a barrier layer,
v) a tie layer,
vi) a polyolefin support layer, and
vii) an exterior polyolefin layer.

In embodiments using more than 7 layers of film, for example 9 layers, the further layers may be additional polyolefin support layers.

The multi-layer barrier film may be generally based on polyethylene, possibly with the exception of the barrier layer which may consist of polyamide or EVOH without any polyethylene. In embodiments of the invention, at least one, and preferably both, of the exterior polyolefin layers may comprise polyethylene, preferably linear low density polyethylene, and/or a polyethylene co-polymer such as ethylene vinyl acetate (EVA).

The barrier layer is typically arranged centrally in the multi-layer structure that constitutes the multi-layer barrier film according to embodiments of the invention, or at least the barrier layer is not provided as an exterior layer that forms a surface of the film. The barrier layer may comprise, or consist of, polyamide or ethylene vinyl alcohol (EVOH).

On either side of the central barrier layer, tie layers are typically provided to join the barrier layer to the exterior polyolefin layers or to supporting polyolefin layers. A tie layer should thus bind to the barrier layer as well as to the exterior layers or the polyolefin support layer, respectively. For example the tie layer may comprise or consist of a polyolefin copolymer providing compatibility with or binding to the adjacent polyolefin layer, and co-monomer units providing compatibility with or binding to the barrier layer. The polyolefin of the tie layer may in particular comprises ethylene units for binding to an adjacent polyolefin layer comprising polyethylene, and the co-monomer units may comprise e.g. maleic anhydride.

The polyolefin support layers typically comprise or consist of linear low density polyethylene (LLDPE).

The multi-layer barrier film typically comprises two exterior polyolefin layers arranged to form the opposing surfaces of the film. The polyolefin layers sandwich the barrier layer, hence the barrier layer is arranged between the two polyolefin layers.

The exterior polyolefin layers may be of identical or similar composition, or may differ in composition. For example, one exterior layer may be provided as a "cling layer", adapted to provide cling and allow adherence to the film itself or an external object, whereas the other exterior layer may be provided as a slip layer, adapted to prevent adherence to the film itself or an external object. Typically an exterior layer comprises a thermoplastic polymer, such as a polyolefin, as a base material. Examples of suitable polyolefins are polyethylenes, e.g. linear low density polyethylene (LLDPE), low density polyethylene (LDPE), and very low density polyethylene (VLDPE), as well as polypropylene and polybutylene. Examples of particularly suitable base materials for an exterior layer include polyethylene, especially LLDPE or VLDPE, and ethylene-vinyl acetate co-polymer. Optionally the exterior layers may be transparent.

According to an embodiment, at least one of the two exterior layers, in particular a cling layer, may comprise a soft polymer.

As used herein, "soft polymer" refers to a polyolefin based polymer providing a relatively soft surface to a polyolefin layer surface in order to increase friction, in particular in a direction parallel to the film surface. An example of a "soft polymer" is very low density polyethylene (VLDPE) having a density of 910 g/cm³ or less, or ethylene vinyl acetate co-polymer (EVA) having a vinyl acetate co-monomer content of at least 12 %, preferably at least 15 %, by weight of the EVA co-polymer. A soft polymer may be particularly advantageous when the multi-layer stretch film is wrapped with an overlap, such that the film may adhere, or cling, to itself. By the term "cling" is meant the ability of a material to adhere to itself or an adjacent surface. The adjacent surface may be the surface of the same film, or the surface of a different film, or the surface of a different object.

In an example, the cling of at least one of the exterior layers may be achieved by the use of a soft polymer, or a combination of soft polymers, optionally in combination with a polyolefin such as LLDPE. For example, at least one exterior layer may comprise or consist of VLDPE. In an embodiment, the content of VLDPE may be up to 100 % by weight of the layer in question. Thus, for instance, one of the two exterior layers may consist of 100 % VLDPE, whereas the other exterior layer may contain no soft polymer.

In embodiments of the invention, at least one layer of the multi-layer barrier film may comprise a tackifier. Examples of tackifiers that may be used include for example soft polymers and migrating tackifiers. An example of a migrating tackifier is polyisobutylene (PIB).

As mentioned above, a soft polymer may provide a relatively soft surface which may increase friction, and reduce slip in a direction substantially parallel to the film surface. A migrating tackifier, on the other hand, may be included to provide an adhesive surface that increases the friction in a direction substantially perpendicular to the film surface.

A migrating tackifier may migrate from any one of the layers of the multi-layer barrier film to the film surface of the multi-layer barrier film (typically the surface of an exterior layer). Upon saturation of a layer with regard to the migrating tackifier, the excess of migrating tackifier may migrate into adjacent layer(s). For example, the migrating tackifier may be initially added to a non-exterior layer, and upon saturation of the non-exterior layer, the excess of migrating tackifier may migrate into an adjacent exterior layer. When an exterior layer is saturated with the migrating tackifier, the excess tackifier accumulates at the exterior surface of the layers, providing cling. Thus, to benefit from its effects a migrating tackifier is added at a content that is sufficient to allow saturation of any layers in which the migrating tackifier is soluble and the resulting migration to the exterior surface of at least one of the exterior layers.

A migrating tackifier can thus be added to one or more layers of the multi-layer barrier film, often including the thickest layer(s) of the multi-layer barrier film. A migrating tackifier such as PIB may be added to any layer, although generally not to the barrier layer, since the tackifier may not be soluble in the barrier layer material.

The migrating tackifier may be soluble in polyethylene and other polyolefins. Suitable contents of at least one of a migrating tackifier, a soft polymer and a combination thereof can be determined by a person skilled in the art. Exemplary contents are provided in tables 1-4 below.

In embodiments where an exterior layer comprises a soft polymer such as EVA, EMA, or VLDPE as described above as a base material, this may provide sufficient cling, such that it may not be necessary to add a further tackifier to that particular layer. Optionally however, a layer comprising a soft polymer may additionally comprise a migrating tackifier. Consequently, the soft polymer EVA may be used in combination with a migrating tackifier such as PIB in order to provide cling to at least one exterior layer. An advantage of combining a soft polymer, e.g. EVA, and a migrating tackifier, e.g. PIB, in at least one exterior layer is that the cling may be improved due to increased resistance of the exterior layer to forces both substantially parallel as well as substantially perpendicular to the exterior surface of the exterior layer.

The multi-layer barrier film may further comprise a pigment. By the addition of a pigment, e.g. a white pigment, a black pigment, or a green pigment, to at least one layer of the multi-layer barrier film, the color and the opacity of the film may be adapted to suit the intended use.

A white pigment provides opacity by scattering visible light, and may be advantageous since it may prevent excessive heating of the wrapped contents upon exposure to sunlight. An example of a suitable white pigment is titanium dioxide (TiO₂). Colored pigments provide opacity by absorbing light, and be desirable e.g. for esthetic reasons. An example of a commonly used colored pigment is carbon black.

The multi-layer barrier film may comprise a pigment at a content of from 0 to 15 % by weight, e.g. from 3 to 7 % by weight, based on the total weight of the multi-layer barrier film. For example, a multi-layer stretch film for silage typically comprises from 2 to 5 % by weight of a pigment, based on the total weight of the multi-layer barrier film, especially a pigment in the form of titanium dioxide (TiO₂). The pigment may be added to one or more layers of the film, although typically not the barrier layer.

The transparency of the multi-layer stretch film is usually within the range of from 63 to 73 %, such as approximately 70 %, measured by the standard method ASTM D-1003. A certain level of opacity may be advantageous with regard to protection against noxious animals, such as vermin, birds, and insects, which may harm either the multi-layer barrier film or the wrapped product. As an example, the certain level of opacity of the multi-layer barrier film may hide the packaged crop from the view of birds and other wild animals, thereby reducing the risk for puncture by an interested animal.

The multi-layer barrier film according to embodiments of the invention may comprise a UV stabilizer, contained in at least one layer of the multi-layer film. By the term "UV stabilizer" is meant an agent which at least to some extent protects a material from long-term degradation effects due to light exposure (including sunlight), especially exposure to ultraviolet radiation (UV). A UV stabilizer typically traps free radicals generated in the polyolefin material by UV irradiation, and may thus prevent chain reactions within the polyolefin layer(s) of the multi-layer barrier film, which would otherwise result in degradation of the polyolefin material. Good UV stabilization of the film material is particularly desirable in order to avoid degradation during storage outdoors for extended periods of time, which is often the case with silage.

A UV stabilizer may be added to any layer of the multi-layer barrier film, although usually not to the barrier layer. In some embodiments however, all layers of the multi-layer barrier film may comprise a UV stabilizer. Examples of suitable UV stabilizers are Chimassorb 944 (BASF, Italy), Tinuvin 622 (BASF, Germany), and Chimassorb 2020 (BASF, Italy). A pigment, such as TiO₂ or CB, may also function as a UV stabilizer. The multi-layer barrier film may comprise UV stabilizer at a content of from 0 to 0.6 % by weight based on the total weight of the film.

The multi-layer barrier film may have a total film thickness within the range of from 8 µm to 50 µm, such as from 15 µm to 35 µm, for example about 25 µm. The thickness of each of the two exterior layers may be within the range of from 1 µm to 10 µm, such as from 2 µm to 5 µm, for example from 2 µm to 3 µm. The thickness of the barrier layer may be within the range of from 0.3 µm, from 0.4 µm, or from 0.5 µm, and up to 2.5 µm, up to 5 µm or up to 10 µm. For example the barrier layer may have a thickness in the range of from 0.5 to 2.5 µm. The weight of a barrier layer having a thickness of 10 µm may correspond to from 20 % to 40 % of the total weight of the film. However, since the barrier layer raw material may be relatively expensive, for economic reasons it may be preferred to use a thin barrier layer which constitutes less than 20 %, e.g. less than 10 %, of the total weight of the film.

Advantageously, the multi-layer barrier film of the invention may have a low transmission of oxygen and water vapor. In some embodiments of the invention, the multi-layer barrier film may have an oxygen permeability of less than 100 cm³/m²/24 h, as measured on 6 layers of a 25 µm film according to ISO method 15105-2.

In embodiments of the invention, the multi-layer barrier film is a stretch film, that is, a stretchable film that is capable of deformation by stretching during use (e.g. wrapping an object). Hence, the film is adapted to retain its qualities upon stretching, or at least retain an acceptable quality.

Furthermore, in some embodiments, the multi-layer barrier film may be pre-stretched as part of its production process. Hence, the multi-layer barrier film may be a pre-stretched stretch film, i.e. a pre-stretched film to be used as a stretch film, which implies that the pre-stretched film is further stretched during use. As used herein, "pre-stretched" means that the film has been stretched at least once during its production, and thus is stretched already before being put to use e.g. in a wrapper (where it is further stretched). A pre-stretched film behaves differently when subjected to further stretching compared to a non-prestretched film.

A pre-stretched multi-layer barrier film according to embodiments of the invention may have a stretch ratio of from 1:2 to 1:4 in the state in which is be wound to a roll. The term "stretch ratio" as used herein means the ratio of the total film length before stretching to the total film length after stretching. Thus, a stretch ratio of 1:1.5 means that the film has been stretched by 50 % of its length before said stretching.

The multi-layer barrier film may be an agricultural stretch wrap film, or a bale wrap film, for example a silage film, and in particular a pre-stretched agricultural bale wrap film or silage film. Agricultural bale wrap films or silage films are usually stretch films.

Advantageously, a multi-layer barrier stretch film as described herein may have a mechanical performance comparable with a conventional silage film. By the term "mechanical performance" is mainly meant the mechanical strength of the material, measured in terms of at least one of tensile strength (measured according to EN ISO 527-1 and EN ISO 527-3), tear strength (measured according to ISO 6383-2) and dart impact resistance (measured according to ISO 7765-1).

According to another aspect, the invention relates to the use of a multi-layer barrier film as described above as an agricultural film, for covering or wrapping agricultural produce. In particular the film may be used for wrapping bales, such as silage bales.

According to yet another aspect, the invention relates to the use of a multi-layer barrier film as described above for coverage of a pit silo.

Alternatively, the multi-layer barrier film as described above may be used as a pallet wrapping film.

Alternatively, the multi-layer barrier film as described above may be used as a waste wrap film, for wrapping any type of waste or refuse, such as for household refuse, compostable waste, or industrial waste, e.g. from construction sites, for temporary or permanent handling, storage or disposal. The multi-layer barrier film of the present invention may for example prevent bad odor from leaking from wrapped waste during short term or long term storage prior to incineration. The multi-layer barrier film used as a waste wrap film may also prevent or reduce the rate of undesired decomposition of biological material by preventing contact with oxygen.

It is noted that the invention relates to all possible combinations of features recited in the claims.

### Brief description of the drawings

This and other aspects of the present invention will now be described in more detail, with reference to the appended drawings showing embodiment(s) of the invention.
Fig. 1 shows a cross-sectional side view of a multi-layer barrier film according to a first embodiment of the present invention.
Fig. 2 shows a cross-sectional side view of a multi-layer barrier film according to a second embodiment of the present invention.
Fig. 3 schematically shows a production process for manufacture of a multi-layer barrier film according to embodiments of the invention.
Fig. 4 shows a stress-strain curve of a polyethylene film (conventional bale wrap film)
Fig. 5 shows a stress-strain curve of a prestretched polyethylene film.

As illustrated in the figures, the sizes of layers and regions may be are exaggerated for illustrative purposes and, thus, are provided to illustrate the general structures of embodiments of the present invention. Like reference numerals refer to like elements throughout.

### Detailed description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

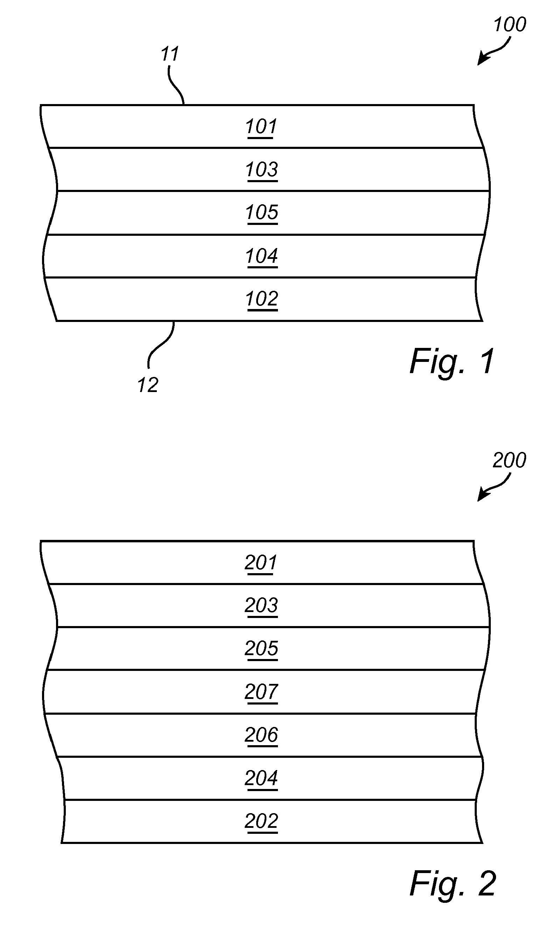

Figure 1 shows an exemplary multi-layer barrier film in cross-section. The multi-layer barrier film 100, hereinafter referred to as the film 100, comprises a five-layer structure comprising a barrier layer 105 provided as a central layer, surrounded on opposing sides by exterior layers 101, 102 which form the respective surfaces 11, 12 of the film 100. Between the barrier layer 105 and the exterior layer 101 a tie layer 103 is provided, and between the barrier layer 105 and the exterior layer 102 another tie layer 104 is provided.

The barrier layer 105 substantially consists of ethylene vinyl alcohol copolymer, e.g. Evasin^{®} EVOH (Arkema) or SoarnoL™ (Nippon Synthetic Chemical Industry Co, Japan).

The tie layers 103, 104 are provided to join the barrier layer 105 to the exterior layers 101,102 and prevent delamination or peeling of the layers. The tie layers 103, 104 typically comprise a polyolefin comprising a maleic anhydride comonomer. A suitable material for the tie layers is Orevac^{®} (Arkema).

The exterior layer 101 is a so-called cling layer and comprises EVA at a content of about 90-95 %, and additionally comprises a migrating tackifier and a UV stabilizer. In an example, the EVA copolymer has an ethylene content of 83 % and an acetate content of 17 % by weight based on the total EVA copolymer.

The exterior layer 102 is a so-called slip layer and contains linear low density polyethylene at a content of about 98 %, and an UV stabilizer.

Figure 2 shows an exemplary multi-layer barrier film 200 comprising a 7-layer structure. Like the film 100 of Figure 1, the film 200 comprises a central barrier layer 207 sandwiched on opposing sides by tie layers 205, 206 respectively. An exterior layer 201 forms a surface of the film, and represents a cling layer comprising VLDPE or EVA, similar to the layer 101. Another exterior layer 202 forms the opposite surface of the film 200, representing a slip layer comprising LLDPE similarly to the layer 102 of Figure 1.

However, in contrast to the film described above with reference to Figure 1, the tie layer 205 is not in direct contact with the exterior layer 201. Instead, a support layer 203 comprising LLDPE is provided between the exterior layer 201 and the tie layer 205. Likewise, another support layer 204 comprising LLDPE is arranged between the exterior layer 202 and the tie layer 206. The function of the support layers is mainly to increase the mechanical strength of the film 200.

Tables 1 and 2 present exemplary compositions of the multi-layer barrier film of Figure 1. Tables 3 and 4 present exemplary compositions of the multi-layer barrier film of Figure 2.

**Table 1**

| | **LLDPE [wt%]** | **EVOH [wt%]** | **LDPE [wt%]** | **Tie material [wt%]** | **EVA [wt%]** | **PIB [wt%]** | **TiO₂ [wt%]** | **UV stabilizer [wt%]** | **Layer wt% in relation to total film weight** |
|---|---|---|---|---|---|---|---|---|---|
| Exterior layer 1 (cling layer) | 0 | 0 | 0 | 0 | 92-99.3 | 0.5-7 | 0 | 0.2-1 | 5-20 |
| Tie layer 1 | 0 | 0 | 0 | 89-100 | 0 | 0 | 0-10 | 0-1 | 7-15 |
| Barrier layer | 0 | 100 | 0 | 0 | 0 | 0 | 0 | 0 | 4-15 |
| Tie layer 2 | 0 | 0 | 0 | 89-100 | 0 | 0 | 0-10 | 0-1 | 7-15 |
| Exterior layer 2 (slip layer) | 62-96.3 | 0 | 1.5-15 | 0 | 0 | 0-15 | 2-7 | 0.2-1 | 35-77 |

**Table 2**

| | **LLDPE [wt%]** | **EVOH [wt%]** | **LDPE [wt%]** | **Orevac® [wt%]** | **EVA [wt%]** | **PIB [wt%]** | **TiO₂ [wt%]** | **UV stabilizer [wt%]** | **Layer wt% in relation to total film weight** |
|---|---|---|---|---|---|---|---|---|---|
| Exterior layer 1 (cling layer) | 0 | 0 | 0 | 0 | 94.5 | 5 | 0 | 0.5 | 10 wt% |
| Tie layer 1 | 0 | 0 | 0 | 91.55 | 0 | 0 | 8 | 0.45 | 8 wt% |
| Barrier layer | 0 | 100 | 0 | 0 | 0 | 0 | 0 | 0 | 5 wt% |
| Tie layer 2 | 0 | 0 | 0 | 91.55 | 0 | 0 | 8 | 0.45 | 8 wt% |
| Exterior layer 2(slip layer) | 88.14 | 0 | 3.46 | 0 | 0 | 5 | 3 | 0.4 | 69 wt% |
| **Total film composition*** | **60.82** | **5** | **2.39** | **14.65** | **9.45** | **3.95** | **3.35** | **0.4** | |

Tables 1 and 2: "wt%" refers to weight % of the total weight of the respective layer, unless indicated otherwise. * wt% based on total film weight

**Table 3**

| | **LLDPE [wt%]** | **EVOH [wt%]** | **LDPE [wt%]** | **Tie material [wt%]** | **EVA [wt%]** | **PIB [wt%]** | **Pigment [wt%]** | **UV stabilizer [wt%]** | **Layer wt% in relation to total film weight** |
|---|---|---|---|---|---|---|---|---|---|
| Exterior layer 1 (cling) | 0 | 0 | 0 | 0 | 92-99.3 | 0.5-7 | 0 | 0.2-1 | 5-20 |
| Support layer 1 | 75-93.3 | 0 | 0-2 | 0 | 0 | 3.5-15 | 3-7 | 0.2-1 | 15-35 |
| Tie layer 1 | 0 | 0 | 0 | 93-100 | 0 | 0 | 0-6 | 0-1 | 7-15 |
| Barrier layer | 0 | 100 | 0 | 0 | 0 | 0 | 0 | 0 | 4-15 |
| Tie layer 2 | 0 | 0 | 0 | 93-100 | 0 | 0 | 0-6 | 0-1 | 7-15 |
| Support layer 2 | 75-93.3 | 0 | 0-2 | 0 | 0 | 3.5-15 | 3-7 | 0.2-1 | 15-35 |
| Exterior layer 2 (slip) | 64-94.8 | 0 | 5-20 | 0 | 0 | 0-15 | 0 | 0.2-1 | 5-20 |

**Table 4**

| | **LLDPE [wt%]** | **EVOH [wt%]** | **LDPE [wt%]** | **Orevac® [wt%]** | **EVA [wt%]** | **PIB [wt%]** | **TiO₂ [wt%]** | **UV stabilizer [wt%]** | **Layer wt% in relation to total film weight** |
|---|---|---|---|---|---|---|---|---|---|
| Exterior layer 1 (cling) | 0 | 0 | 0 | 0 | 96.5 | 3 | 0 | 0.5 | 10 |
| Support layer 1 | 87.6 | 0 | 1.5 | 0 | 0 | 6 | 4.5 | 0.4 | 29.5 |
| Tie layer 1 | 0 | 0 | 0 | 95.1 | 0 | 0 | 4.5 | 0.4 | 8 |
| Barrier layer | 0 | 100 | 0 | 0 | 0 | 0 | 0 | 0 | 5 |
| Tie layer 2 | 0 | 0 | 0 | 95.1 | 0 | 0 | 4.5 | 0.4 | 8 |
| Support layer 2 | 87.6 | 0 | 1.5 | 0 | 0 | 6 | 4.5 | 0.4 | 29.5 |
| Exterior layer 2 (slip) | 84.5 | 0 | 15 | 0 | 0 | 0 | 0 | 0.5 | 10 |
| **Total film composition*** | **60.13** | **5** | **2.39** | **15.22** | **9.65** | **3.84** | **3.38** | **0.4** | |

Tables 3 and 4: "wt%" refers to weight % of the total weight of the respective layer, unless indicated otherwise * wt% based on total film weight

The multi-layer barrier film described herein may be produced using processes and equipment known in the art. For example, the film may be a co-extruded, blown or cast film that is optionally pre-stretched in-line or offline during manufacture prior to being wound to a roll for storage or transportation.

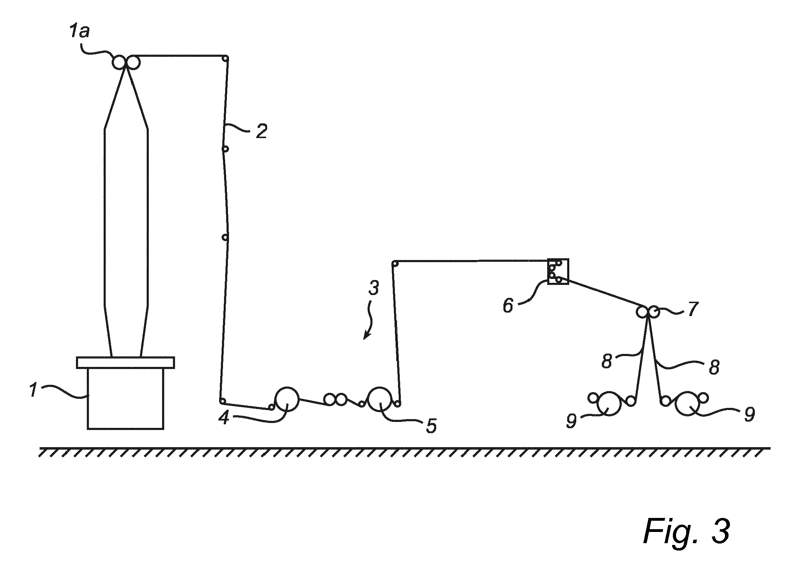

Figure 3 schematically illustrates an example of a blown film extrusion line useful for producing a pre-stretched multi-layer barrier film according to embodiments of the present invention. A co-extruded blown film is formed by extruder 1 and is advanced through primary nip rollers 1a. The nip roller nips together the blown film. From the primary nip rollers the plastic tubular film 2 is passed via guide rollers to the stretch unit 3, where stretching is performed between two rollers, first draw roller 4 and second draw roller 5, having different speeds speeds as compared to each other. The first draw roller in the direction of transfer is wound at a lower speed as compared with the second draw roller. By adjusting the speed of the rollers, different stretch ratios can be achieved. For example, the first draw roller may operate at a speed of 30-110 m/minute, and the second draw roller may operate at a speed of between 40-250 m/minute (and faster than the first draw roller). The speed of the draw rollers is chosen with regard to the desired stretch level and degree of relaxation before winding. The stretching is typically conducted at a temperature in the range of 20°C to 70°C.

After being stretched in the stretch unit 3, the tubular film is passed to a dividing station 6 where the edges of the film 2 may be cut to provide two individual sheet of film. Next, the film 2 is passed to the secondary nip rollers 7 where the individual sheets of film 8 may be separated. Each film sheet 8 may optionally pass through a second dividing station (not shown) where the sheet may be divided longitudinally into two or more parallel sections. Finally, the film sheets, or film sheet sections, are wound onto film collecting means, here winders 9. In embodiments of the invention where the edges of the tubular film are not cut in the dividing station 6, the tubular film is typically wound onto one of the winders 9.

Optionally, during manufacture of a pre-stretched multi-layer barrier film, the film may be stretched and subsequently partially relaxed. Relaxation may occur between the second draw roller 5 and the winders 9. For example, the precursor film may be stretched by 180 % of its length and then partially relaxed to provide a pre-stretched film having a stretch ratio of 1:2.5 (stretched by 150 %). Hence, the stretch ratio of the pre-stretched film refers to the stretch ratio of the resulting, optionally relaxed film, e.g. in the state where it can be wound to a roll, and not necessarily to the maximum degree of stretching experienced by the film during production.

For production of a multi-layer barrier film that is not pre-stretched, the same process may be used except that the stretch unit 3 is omitted and instead the tubular film 2 is advanced directly to the dividing station 6 without being stretched.

Although the production of a blown film is described above, it is understood that the film may alternatively be a cast film.

Film collecting means used for collecting the film produced may be winders, or reels, on to which the film is wound. It may also be collected in any other way, for example film produced directly into a box, or a tray or a pallet.

In general, when a polyolefin film (for example a polyethylene based film such as those used for wrapping of agricultural products) is stretched, the deformation may be elastic (reversible), and/or plastic (non-reversible). Initially, stretching results in completely elastic deformation, such that the film recovers its original shape when the tensile stress is released. However, at a certain degree of stretching (tensile force applied), the deformation becomes partly plastic, meaning that the material can no longer completely retain its original shape, due to molecular dislocations in the polymeric structure. Thus, the film is partly irreversibly stretched. This non-elastic property is utilized for permanently reducing the thickness of cast or blown films. The stretch level at which a polymeric film begins to undergo plastic deformation is called the yield strength or the yield point (in a stress-strain curve) and is dependent on the material.

As mentioned above, the film according to embodiments of the invention may be pre-streched, and may have a stretch ratio in the range of 1:2 to 1:4, meaning that the film is plastically deformed, typically using a stretch unit as described above, by about 100 % to about 300 % of its original length before stretching. That is, the prestretched film has a total length after stretching which is from 200 % to 400 % compared to its original length). For example, the prestretched film may have a stretch ratio of about 1:2.5.

The stretch ratio of a film directly affects the physical properties of the film, and the stretch ratio can be correlated to many of these properties, for example the film thickness (reduced with increasing stretch ratio) and the dimensional uniformity of the film (relatively thickened edge portions); the yield point or yield strength of the film, and the resulting stress experienced by the film at a predetermined strain. Yield point and stress at a predetermined strain both increase with increasing stretch ratio. The stretch ratio of a polyolefin film can be appreciated by i) determining the film material (e.g., LLDPE) on the basis of the raw material used and the density, ii) experimentally determining the stress at, for example, 50 % strain or 100 % strain using a standard tensile test, and iii) comparing the resulting stress value with the stress at the corresponding strain of the raw film material obtained from a stress-strain curve. As a general rule, a stretch ratio of 1:2 (film prestretched by 100 %) roughly doubles the stress experienced by the film at 50 % strain. The stretch ratio also greatly affects the stiffness and the capability of further stretching. The tensile test can suitably be performed according to EN ISO 527-1 and EN ISO 527-3 using five test pieces type 2, with a width of 15 mm, cut in longitudinal direction (MD), at a testing speed of 500 mm/min with an initial grip to grip separation of 50 mm, and calculating the arithmetic average value of five measurements.

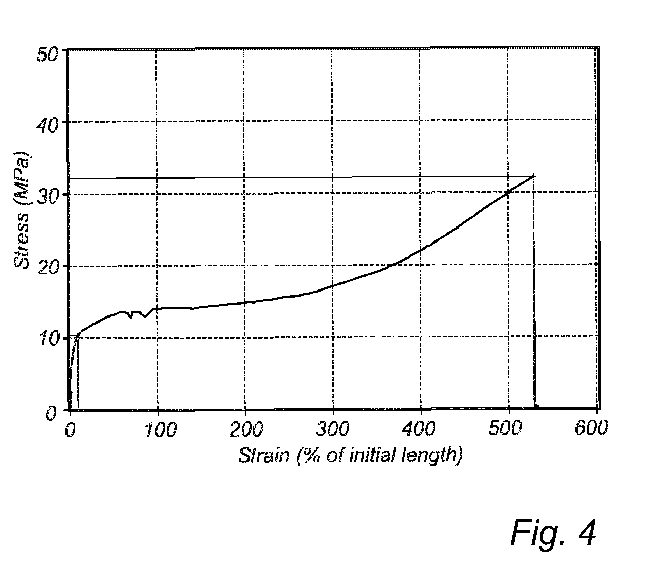

The different behavior of a pre-stretched film upon further stretching, compared to a previously unstretched film, can be observed for instance in a stress-strain diagram. An example of a stress-strain curve of a polyolefin film which has not been pre-stretched is shown in Fig. 4. This curve shows the stress-strain relationship for a polymeric film of 25 µm thickness composed mainly of linear low-density polyethylene (LLDPE) and with minor amounts of low-density polyethylene (LDPE), representing a standard balewrap used for protective wrapping of agricultural bales, and which has not been subjected to prior stretching. As can be seen, at a tensile stress of slightly above 10 MPa, corresponding to an elongation of about 10 %, the curve starts to flatten out, representing the yield point. Also above the yield point, the deformation of the film material is still partly elastic. However, the more a polymeric material is stretched, the smaller is the elastic component, and the more a polymeric film is stretched above the yield point, the more stiff it becomes. Eventually, if the tensile force is further increased, the film breaks. This occurs in Fig. 4 at a tensile stress of about 32 MPa (at an elongation of about 530 %).

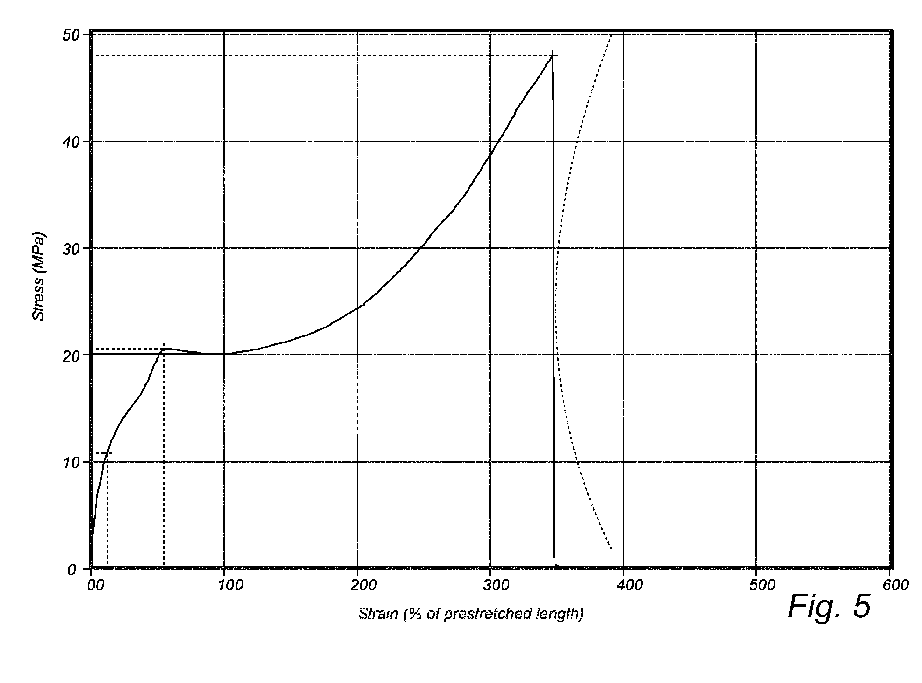

In contrast, a film which is pre-stretched has different elastic properties, and can also withstand a higher tensile stress without breaking. Fig. 5 shows the stress-strain curve of a polyolefin film of the same composition as the film of Fig. 4, but which was prestretched, thereby reducing the thickness to about 19 µm. For all practical purposes, the yield point of this prestretched film is slightly above 20 MPa, and the tensile stress at which the film breaks is closer to 50 MPa.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A stretchable multi-layer barrier film comprising at least one barrier layer arranged between two polyolefin layers.

2. A stretchable multi-layer barrier film according to claim 1, which comprises, in this order,
i) an exterior polyolefin layer
ii) a tie layer
iii) a barrier layer
iv) a tie layer
v) an exterior polyolefin layer.

3. A stretchable multi-layer barrier film according to claim 1, wherein the barrier layer comprises polyamide.

4. A stretchable multi-layer barrier film according to claim 1, wherein the barrier layer comprises ethylene vinyl alcohol.

5. A stretchable multi-layer barrier film according to claim 2, further comprising two polyolefin support layers each arranged between a tie layer and n exterior polyolefin layer, so that the film comprises, in this order:
i) an exterior polyolefin layer
ii) a polyolefin support layer
iii) a tie layer
iv) a barrier layer
v) a tie layer
vi) a polyolefin support layer
vii) an exterior polyolefin layer.

6. A stretchable multi-layer barrier film according to any one of the claims 1 to 5, wherein at least one, preferably all, of said exterior polyolefin layers and/or polyolefin support layers comprises polyethylene, preferably linear low density polyethylene.

7. A stretchable multi-layer barrier film according to claim 1, wherein at least one of said exterior polyolefin layers comprises very low density polyethylene (VLDPE) having a density of 910 g/cm³ or less, or ethylene vinyl acetate co-polymer (EVA) having a vinyl acetate co-monomer content of at least 12 % by weight of the EVA co-polymer, or a mixture thereof.

8. A stretchable multi-layer barrier film according to claim 1, wherein the film comprises a tackifier.

9. A stretchable multi-layer stretch film according to claim 1, wherein the multi-layer barrier film has a total thickness within the range of from 8 to 50 µm, preferably 12-35 µm, such as 25-30 µm.

10. A stretchable multi-layer barrier film according to claim 1, wherein the multi-layer barrier film is pre-stretched.

11. A stretchable multi-layer barrier film according to claim 1, which is an agricultural stretch wrap film.

12. A stretchable multi-layer barrier film according to claim 1, which is a bale wrap film.

13. A stretchable multi-layer barrier film according to claim 1, which is an industrial stretch wrap film.

14. A multi-layer barrier film according to claim 1, which is a waste wrap film.

15. Use of a stretchable multi-layer barrier film according to claim 1 as for wrapping or covering agricultural produce.

16. Use of a stretchable multi-layer barrier film according to claim 1 for wrapping bales, in particular silage bales.

17. Use of a stretchable multi-layer barrier film according to claim 15 as a waste wrap film.
